# EUROPÄISCHE PATENTSCHRIFT

(11) **EP 3 710 143 B1**
(45) Veröffentlichungstag und Bekanntmachung des Hinweises auf die Patenterteilung: **20.08.2025**
(21) Anmeldenummer: 18785611.7
(22) Anmeldetag: 11.10.2018
(51) Int. Cl.: B01D 61/18, B01D 36/00, B01D 61/20, B01D 61/22

(54) **AUTOMATISIERTE EINWEG-FILTRATIONSVORRICHTUNG UND VERFAHREN ZUR STEUERUNG EINER AUTOMATISIERTEN EINWEG-FILTRATIONSVORRICHTUNG**
AUTOMATED SINGLE-USE FILTERING APPARATUS, AND METHOD FOR CONTROLLING AN AUTOMATED SINGLE-USE FILTERING APPARATUS
DISPOSITIF DE FILTRATION JETABLE AUTOMATISÉ ET PROCÉDÉ DE COMMANDE D'UN DISPOSITIF DE FILTRATION JETABLE AUTOMATISÉ

(30) Priorität: 16.11.2017 DE 102017127017
(43) Veröffentlichungstag der Anmeldung: 23.09.2020
(73) Patentinhaber: Sartorius Stedim Biotech GmbH, 37079 Göttingen (DE)
(72) Erfinder: DIEL, Bernhard, 37079 Goettingen (DE); SOMMER, Maik, 37079 Goettingen (DE)
(74) Vertreter: Novagraaf International SA
(86) Internationale Anmeldenummer: PCT/EP2018/077762
(87) Internationale Veröffentlichungsnummer: WO 2019/096502

(56) Entgegenhaltungen:
- EP-A1- 2 119 492
- EP-A1- 3 012 012
- WO-A1-2016/177650
- WO-A1-2017/032560
- WO-A2-2007/118235
- WO-A2-2012/051517
- DE-U1- 202017 103 082
- US-A1- 2005 171 501
- US-A1- 2010 192 686

## Beschreibung

Die Erfindung betrifft eine automatisierte Einweg-Filtrationsvorrichtung, die insbesondere für großvolumige Filtrationsprozesse geeignet ist. Die Erfindung betrifft ferner ein Verfahren zur Steuerung einer solchen automatisierten Einweg-Filtrationsvorrichtung.

Im Bereich der Einweg- (Single Use) Technologieentwicklung für biopharmazeutische Anwendungen erfreuen sich Filtrationselemente einer zunehmenden Beliebtheit und werden inzwischen auf breiter Ebene eingesetzt. In den letzten Jahren haben sich zum Beispiel Einweg-Filtrationstechnologien stetig weiterentwickelt und werden derzeit nicht mehr nur im Laborbereich und im Bereich der Prozessentwicklung eingesetzt. Vielmehr sind inzwischen Einweg-Filtrationselemente auch in kommerziellen Herstellungsprozessen von pharmazeutischen Produkten für die klinischen Phasen 1 bis 3 (Entwicklungsstadien bei der Medikamentenentwicklung) oder auch in der kommerziellen Produktion solcher Wirkstoffe gebräuchlich. Derzeit am Markt erhältliche Einweg-Filtrationsvorrichtungen beschränken sich auf kleinere Filterelemente, die wiederum lediglich auf die reine Funktionalität "Filtrieren" beschränkt sind.

Die WO 2017/032560 A1 zeigt eine vollständig vorsterilisierbare, anschlussfertige und integritätstestbare Einweg-Filtrationsvorrichtung, die für großvolumige Filtrationsprozesse ausgelegt ist. Diese Einweg-Filtrationsvorrichtung umfasst eine Mehrzahl von Einweg-Filtercapsulen einer Standardgröße, die in einem vorgegebenen Raster angeordnet und durch Leitungen miteinander verbunden sind. Die Filtercapsulen werden von einer starren Halterung getragen.

Aus der WO 2016/177650 A1 ist eine modulare Anlage zur kontinuierlichen, keimreduzierten Produktion bzw. Aufbereitung eines biopharmazeutischen, biologischen makromolekularen Produktes aus einer heterogenen Zellkultur-Fluid-Mischung bekannt, das folgende Module umfasst: ein Filtrationsmodul, ein Chromatographiemodul, ein Ultrafiltrationsmodul bzw. ein Diafiltrationsmodul, ein Dialysemodul und ein Modul zur kontinuierlichen Virenabreicherung. Die modulare Anlage ist geschlossen und keimreduziert. Eine Besonderheit der Anlage ist die Möglichkeit eines automatischen Filterwechsels unter keimreduzierten Bedingungen. Die Beendigung der Entlüftung des neuen Filters wird auf der Unfiltratseite durch einen Drucksensor oder einen Füllstandssensor oder eine Waage oder einen Flüssigkeitsdetektor detektiert.

Bei den bisherigen Einweg-Filtrationselementen wurde aber die Frage nach einer Einbindung in automatisierte Prozesse nicht berücksichtigt. Mit dem oben beschriebenen Einzug der Einweg-Filtrationstechnologie in die kommerzielle Produktion erhöht sich neben der reinen Skalierung, also der erforderlichen Filtergröße und damit Filtrationsfläche, auch der Bedarf nach automatisierten Filtrationsverfahren. Dies erfordert die Einbettung von Filtrationselementen in Schlauchleitungen, Kunststoffverrohrungen, Einweg-Sensoren und Verbindungssysteme, die dann erst durch den Anschluss an ein geeignetes Kontroll- und Steuerungssystem zu einer ganzheitlichen Prozesslösung werden können.

Auf dem Gebiet der Einweg-Filtrationstechnologie besteht also ein Bedarf nach einer anschlussfertigen Einweg-Filtrationsvorrichtung, die ein teil- oder vollautomatisiertes Filtrationsverfahren in großem Maßstab ermöglicht. Aufgabe der Erfindung ist es, diesem Bedarf nachzukommen.

Gelöst wird diese Aufgabe durch eine automatisierte Einweg-Filtrationsvorrichtung mit den Merkmalen des Anspruchs 1 sowie durch ein Verfahren zur Steuerung einer automatisierten Einweg-Filtrationsvorrichtung mit den Merkmalen des Anspruchs 3. Vorteilhafte und zweckmäßige Ausgestaltungen der erfindungsgemäßen Vorrichtung und des erfindungsgemäßen Verfahrens sind in den zugehörigen Unteransprüchen angegeben.

Die erfindungsgemäße automatisierte Einweg-Filtrationsvorrichtung ist für großvolumige Filtrationsprozesse vorgesehen und umfasst einen Unfiltrateingang, ein oder mehrere Filterelemente (in einer oder mehrerer Filtereinheiten), einen Filtratausgang, einen Sterilluftfilter, der an einen Entlüftungsausgang der Einweg-Filtrationsvorrichtung angeschlossen ist, und Sensoren zur Erfassung bestimmter Prozessparameter und Regeleinrichtungen zur Einstellung bestimmter Prozessparameter sowie ein externes Kontroll- und Steuerungssystem. Die Sensoren und Regeleinrichtungen sind mit dem externen Kontroll- und Steuerungssystem verbunden, das zur Auswertung und Verarbeitung von Sensordaten sowie zur Ansteuerung der Regeleinrichtungen basierend auf einem oder mehreren Steuerungsalgorithmen eingerichtet ist. Die Sensoren umfassen einen am Unfiltrateingang angeordneten Durchflusssensor, einen am Unfiltrateingang angeordneten Eingangsdrucksensor, einen am Filtratausgang angeordneten Ausgangsflüssigkeitsdetektor und einen am Filtratausgang angeordneten Ausgangsdrucksensor. Die Regeleinrichtungen umfassen eine eingangsseitige Förderpumpe, deren Förderleistung regelbar ist, ein am Unfiltrateingang angeordnetes Eingangsregelventil, ein am Filtratausgang angeordnetes Ausgangsregelventil und ein zwischen den Entlüftungsausgang und den Sterilluftfilter eingefügtes Entlüftungsregelventil. Das Entlüftungsregelventil kann unmittelbar durch das externe Kontroll- und Steuerungssystem geöffnet oder geschlossen werden.

Die Erfindung beruht unter anderem auf der Erkenntnis, dass eine Automatisierung eines Filtrationsprozesses bei Verwendung von Einweg-Komponenten - im Vergleich zu herkömmlichen Mehrweg-Anlagen mit Edelstahl-Komponenten - aufgrund der deutlich höheren, materialbedingten Risiken, von größerer Bedeutung ist. Deshalb hat insbesondere die Prozesssicherheit bei Einweg-Systemen einen noch höheren Stellenwert. Durch eine Automatisation können manuelle Fehlbedienungen oder -einstellungen eines Bedieners reduziert oder sogar vollständig eliminiert werden. Falls dennoch Fehler auftreten oder sich anbahnen, kann dies frühzeitig erkannt werden. Außerdem lässt sich durch das fortwährende Ermitteln, Kontrollieren, Überwachen und Einstellen optimaler Prozessparameter eine erhebliche Effizienzsteigerung erreichen. Mit der vorgeschlagenen Einweg-Filtrationsvorrichtung ist es möglich, einen kompletten Filtrationsprozess mit allen oder wenigstens einigen Prozessschritten mithilfe des Kontroll- und Steuerungssystems teil- oder vollautomatisch durchzuführen. Voraussetzung hierfür sind die an das Kontroll- und Steuerungssystem angebundenen Sensoren und Regeleinrichtungen zur Erfassung, Kontrolle und ggf. Regelung bestimmter prozessrelevanter Parameter.

Die an das Kontroll- und Steuerungssystem angebundenen Sensoren bzw. Regeleinrichtungen sind alle als Einweg-Komponenten ausgelegt.

Die Sensoren umfassen vorzugsweise noch einen zwischen den Entlüftungsausgang und den Sterilluftfilter eingefügten Entlüftungsflüssigkeitsdetektor, wobei dieser wiederum als Einweg-Komponenten ausgelegt ist.

Die Erfindung schafft auch ein Verfahren zur Steuerung einer erfindungsgemäßen automatisierten Einweg-Filtrationsvorrichtung, wobei das Kontroll- und Steuerungssystem mehrere oder alle der folgenden Prozessschritte wenigstens teilweise automatisch nacheinander durchführt:
- Befüllen der Einweg-Filtrationsvorrichtung mit einem Benetzungsmedium und vollständige Entlüftung über den Sterilluftfilter;
- Spülen und Benetzen der Einweg-Filtrationsvorrichtung oder des Filterelements;
- Entleeren und Belüften der Einweg-Filtrationsvorrichtung durch statisches Leerlaufenlassen oder aktiv durch Leerdrücken mit Hilfe eines gasförmigen Mediums;
- Pre-Use-Filter-Integritätstest mit einem gasförmigen Medium;
- Befüllen der Einweg-Filtrationsvorrichtung mit einem flüssigen Produkt und vollständige Entlüftung;
- Filtration eines flüssigen Produkts unter permanenter Überwachung des Eingangsdrucks bzw. Ausgangsdrucks und vorzugsweise der Durchflussrate;
- Filtration eines flüssigen Produkts unter zwischenzeitlicher Nachentlüftung der Einweg-Filtrationsvorrichtung bei Bedarf;
- Ausschieben von Produktrestflüssigkeit nach Beendigung der Filtration und Spülen mit Puffer oder Wasser oder einem anderen flüssigen Medium;
- Entleeren und Belüften der Einweg-Filtrationsvorrichtung durch statisches Leerlaufenlassen oder aktiv durch Leerdrücken mit Hilfe eines gasförmigen Mediums; und
- Post-Use-Filter-Integritätstest mit einem gasförmigen Medium.

Vorzugsweise werden die Prozessschritte im Rahmen eines Gesamtprozesses in der genannten Reihenfolge nacheinander durchgeführt.

Nachfolgend werden bestimmte bevorzugte Kontroll- und Regelvorgänge angegeben, die im Rahmen eines Filtrationsprozesses während eines oder mehrerer der oben genannten Prozessschritte voll- oder teilautomatisch mithilfe des Kontroll- und Steuerungssystems und der daran angebundenen Sensoren bzw. Regeleinrichtungen vorteilhaft durchgeführt werden können.

Das Befüllen der Einweg-Filtrationsvorrichtung mit Benetzungsmedium und/oder Produkt erfolgt unter fortlaufender Überwachung des Drucks am Eingangsdrucksensor durch das Kontroll- und Steuerungssystem. Das Kontroll- und Steuerungssystem regelt die Leistung der Förderpumpe so, dass ein vorgegebener Höchstdruck nicht überschritten wird.

Beim Entlüften und/oder Nachentlüften der Einweg-Filtrationsvorrichtung über den Sterilluftfilter wird das Entlüftungsregelventil vom Kontroll- und Steuerungssystem geöffnet, bis der Entlüftungsflüssigkeitsdetektor Flüssigkeit detektiert. Das Kontroll- und Steuerungssystem schließt dann unmittelbar das Entlüftungsregelventil.

Beim Spülen und Benetzen der Einweg-Filtrationsvorrichtung oder des Filterelements bezieht das Kontroll- und Steuerungssystem Informationen vom Durchflusssensor am Unfiltrateingang und regelt darauf basierend die Leistung der Förderpumpe. Das Kontroll- und Steuerungssystem überwacht dabei gleichzeitig den Druck am Eingangsdrucksensor fortlaufend. Über das Eingangsregelventil und/oder das Ausgansregelventil werden durch das Kontroll- und Steuerungssystem automatisch eine gewünschte Spülleistung sowie gewünschte Druckverhältnisse eingestellt und geregelt.

Beim Spülen und Benetzen der Einweg-Filtrationsvorrichtung oder des Filterelements regelt und/oder taktet das Kontroll- und Steuerungssystem das Entlüftungsregelventil und das Ausgangsregelventil alternierend, so dass eine kontrollierte Vermischung und/oder Verdrängung einer Flüssigkeit durch eine andere Flüssigkeit stattfindet.

Beim Entleeren und Belüften der Einweg-Filtrationsvorrichtung durch statisches Leerlaufenlassen oder aktiv durch Leerdrücken mit Hilfe von Luft öffnet das Kontroll- und Steuerungssystem das Entlüftungsregelventil und/oder das Ausgangsregelventil, um ein Abfließen der Flüssigkeit zu ermöglichen.

Beim Entleeren und Belüften der Einweg-Filtrationsvorrichtung durch statisches Leerlaufenlassen oder aktiv durch Leerdrücken mit Hilfe von Luft signalisiert das Kontroll- und Steuerungssystem basierend auf Informationen des Ausgangsflüssigkeitsdetektors, dass der Entleerungsprozess abgeschlossen ist.

Beim Pre-Use-Filter-Integritätstest mit einem gasförmigen Medium steuert das Kontroll- und Steuerungssystem ein externes Integritätstestgerät an, welches den Integritätstest selbst durchführt. Das Kontroll- und Steuerungssystem steuert dabei über einen Schließkörper (Antrieb) die Regelventile so an, dass dabei das Eingangsregelventil geschlossen und das Ausgangsregelventil sowie das Entlüftungsregelventil geöffnet sind.

Bei der Filtration eines Produktes und/oder beim Ausschieben von Produktrestflüssigkeit nach Beendigung der Filtration und Spülen mit Puffer oder Wasser und/oder beim Entleeren und Belüften der Einweg-Filtrationsvorrichtung überwacht das Kontroll- und Steuerungssystem den Druck am Eingangsdrucksensor fortlaufend. Alternativ oder zusätzlich bezieht das Kontroll- und Steuerungssystem Informationen vom Durchflusssensor am Unfiltrateingang. Darauf basierend regelt das Kontroll- und Steuerungssystem die Förderpumpe so, dass eine bestimmte Filtrationsleistung erreicht und/oder dass ein vorbestimmter Druck nicht überschritten wird.

Im Falle eines übermäßigen Druckanstieges drosselt das Kontroll- und Steuerungssystem die Förderpumpe oder schaltet sie ab und/oder schließt das Eingangsregelventil.

Beim Ausschieben von Produktrestflüssigkeit nach Beendigung der Filtration signalisiert das Kontroll- und Steuerungssystem basierend auf Informationen des Ausgangsflüssigkeitsdetektors, dass der Ausschiebeprozess abgeschlossen ist.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht einer Einweg-Filtrationsvorrichtung mit Anschlussleitungen und weiteren Anschlusselementen; und
- Figur 2 eine schematische Seitenansicht einer erfindungsgemäßen automatisierten Einweg-Filtrationsvorrichtung.

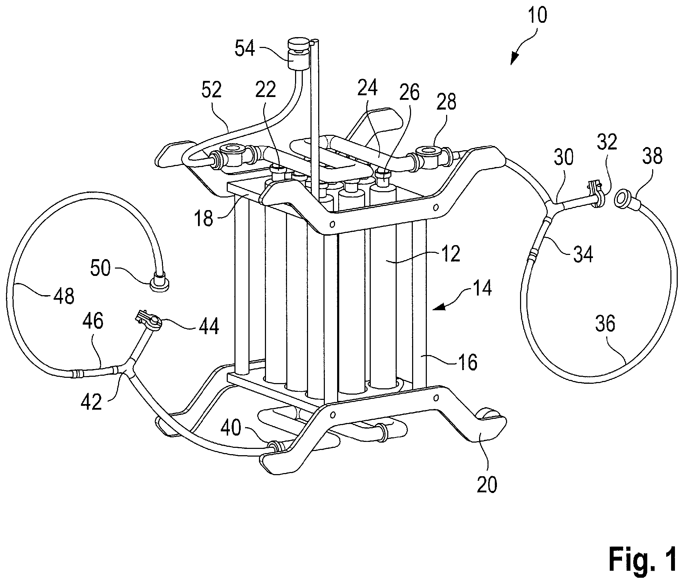

In Figur 1 ist eine Einweg-Filtrationsvorrichtung 10 dargestellt, die der aus der WO 2017/032560 A1 bekannten Vorrichtung ähnlich ist. Eine Mehrzahl von Filtercapsulen 12 wird von einer starren Halterung 14 in einer vorgegebenen Anordnung (Raster) in Position gehalten. Der Begriff "Filtercapsule" ist hier allgemein zu verstehen und soll jegliche eigenständig montierbare Baugruppe mit einem oder mehreren Filterelementen (Membranen), die in einer oder mehreren Filtereinheiten verbaut sind, bezeichnen. Die Halterung 14 umfasst Stützsäulen 16, die durch Querstreben 18 miteinander verbunden sind. Standfüße 20 sorgen für einen sicheren Halt der Vorrichtung 10. An den Querstreben 18 sind Haltemittel 22 für die einzelnen Filtercapsulen 12 vorgesehen. Die Filtercapsulen 12 sind vollständig oder zumindest großteils durch starre, druckstabile Rohrleitungen 24 miteinander verbunden. Der konkrete Verlauf der hier beispielhaft dargestellten Rohrleitungen 24 ist bestimmt durch den vorgesehenen Betrieb der Filtrationsvorrichtung (Parallel- oder Reihenschaltung der Filtercapsulen 12), wobei die Rohrleitungen 24 die notwendigen Abzweigungen 26 zu den einzelnen Filtercapsulen 12 aufweisen. Soweit erforderlich sind die Rohrleitungen 24 an der Halterung 14 befestigt. Die wesentlichen Bestandteile der starren Halterung 14, die starren Gehäuse der Filtercapsulen 12 und die starren Rohrleitungen 24 sind allesamt vorzugsweise aus demselben Material gebildet. Dieses Material und ggf. weitere Materialien, die bei der Vorrichtung 10 Verwendung finden (z. B. für etwaige flexible Schlauchleitungen), sind sterilisierbar, insbesondere mittels Gammastrahlung, und autoklavierbar. Die Einweg-Filtrationsvorrichtung 10 kann somit im vormontierten, d. h. anschlussfertigen Zustand sterilisiert und anschließend verpackt bzw. verpackt und anschließend sterilisiert werden. Die Einweg-Filtrationsvorrichtung 10 ist für einen großvolumigen Filtrationsprozess ausgelegt. Insbesondere stellen die Filtercapsulen 12 insgesamt eine ausreichend große Filtrationsfläche für einen solchen Prozess zur Verfügung.

In Figur 1 sind beispielhaft Leitungen, Verzweigungen und Anschlüsse gezeigt, die für die Einbindung bestimmter Sensoren und Regeleinrichtungen zur Automatisierung der Einweg-Filtrationsvorrichtung 10 vorgesehen sein können. An einen Unfiltrateingang der starren Einweg-Filtrationsvorrichtung 10 ist über ein Schlauchstück ein Einlassventil 28 angeschlossen. Stromaufwärts des Einlassventils 28 ist eine Verzweigung 30 vorgesehen, an deren einem Leitungszweig eine Tri-Clamp-Verbinndung 32 und an deren anderem Leitungszweig ein verstärktes Zwischenschlauchstück 34 und eine daran angeschlossene Eingangsschlauchleitung 36 mit einem ersten Sterilkonnektor 38 vorgesehen sind. Ein Filtratausgang der starren Einweg-Filtrationsvorrichtung 10 ist über ein Schlauchstück ein Auslassventil 40 angeschlossen. Stromabwärts des Auslassventils 40 ist eine Verzweigung 42 vorgesehen, an deren einem Leitungszweig eine Tri-Clamp-Verbinndung 44 und an deren anderem Leitungszweig ein verstärktes Zwischenschlauchstück 46 und eine daran angeschlossene Ausgangsschlauchleitung 48 mit einem zweiten Sterilkonnektor 50 vorgesehen sind. Von einem Entlüftungsausgang der Einweg-Filtrationsvorrichtung 10 führt eine verstärkte Entlüftungsschlauchleitung 52 zu einem Luftfilterhalter, der einen Sterilluftfilter 54 trägt.

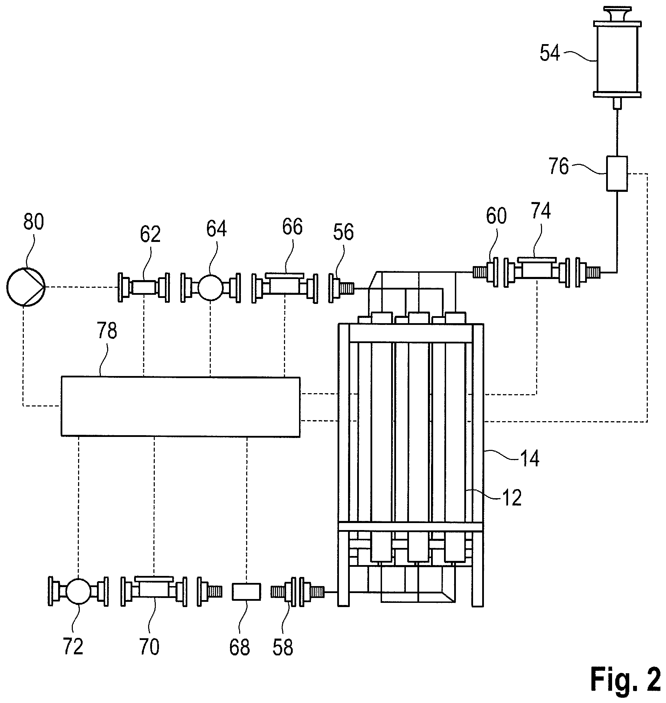

Anhand der in Figur 2 gezeigten beispielhaften Konfiguration einer Einweg-Filtrationsvorrichtung 10 wird die Einbindung von Sensoren und Regeleinrichtungen zur Automatisierung der Einweg-Filtrationsvorrichtung 10 näher erläutert. Der Übersichtlichkeit halber sind bewusst nicht alle Komponenten und Leitungszweige dargestellt. Wie bereits erwähnt sind an einem Unfiltrateingang 56, an einem Filtratausgang 58 und an einem Entlüftungsausgang (bzw. Lufteingang) 60 der Einweg-Filtrationsvorrichtung 10 jeweils (ggf. zusätzliche) Schlauchanschlüsse für die nachfolgend beschriebenen Sensoren und Regeleinrichtungen vorgesehen, die allesamt als Einweg-Komponenten ausgelegt sind.

Am Unfiltrateingang 56 sind ein Durchflusssensor 62 zur Bestimmung des durchströmenden Volumens pro Zeiteinheit, ein Eingangsdrucksensor 64 und ein Eingangsregelventil 66 vorgesehen. Am Filtratausgang 58 sind ein Ausgangsflüssigkeitsdetektor 68, ein Ausgangsregelventil 70 und ein Ausgangsdrucksensor 72 vorgesehen. Am Entlüftungsausgang 60 sind ein Entlüftungsregelventil 74 und ein Entlüftungsflüssigkeitsdetektor 76 vorgesehen.

Voraussetzung für eine vollständige oder teilweise (einzelne Prozessschritte) Automatisierung der Einweg-Filtrationsvorrichtung 10 ist grundsätzlich, dass die eingebundenen Sensoren und Regeleinrichtungen über elektrische Leitungen mit einem Kontroll- und Steuerungssystem 78 in Verbindung stehen und somit eine Steuerung des Gesamtprozesses bzw. des jeweiligen Prozessschritts ermöglichen. Die elektrischen Leitungen dienen einerseits zur Betätigung der Sensoren und Regeleinrichtungen und andererseits, soweit vorgesehen, zum Übermitteln und/oder Empfangen von Daten oder Signalen, die für die Kontrolle und/oder Steuerung benötigt werden. Die Daten- bzw. Signalübertragung kann alternativ auch über Funk erfolgen. Das Kontroll- und Steuerungssystem 78 ist keine Einweg-Komponente, sondern eine entfernt von den Filtercapsulen 12 angeordnete Elektronik, die geeignete Software und Hardware zur Auswertung und Verarbeitung von Sensordaten sowie zur Ansteuerung der Regeleinrichtungen basierend auf einem oder mehreren Steuerungsalgorithmen enthält.

Nachfolgend wird beispielhaft ein mit der Einweg-Filtrationsvorrichtung 10 durchführbarer Filtrationsprozess beschrieben, der sich in folgende vollständig oder teilweise automatisiert ablaufende Einzelschritte gliedert:
1) Befüllen der Einweg-Filtrationsvorrichtung 10 mit einem Benetzungsmedium (z. B. Wasser) und vollständige Entlüftung über den Sterilluftfilter 54;
2) Spülen und Benetzen der gesamten Einweg-Filtrationsvorrichtung 10 bzw. des Filterelements (filtrationswirksame Schicht);
3) Entleeren und Belüften der Einweg-Filtrationsvorrichtung 10 durch statisches Leerlaufenlassen oder aktiv durch Leerdrücken mit Hilfe von Luft;
4) Pre-Use-Filter-Integritätstest mit einem gasförmigen Medium, z. B. Luft;
5) Befüllen der Einweg-Filtrationsvorrichtung 10 mit Produkt und vollständige Entlüftung (Prozess wie Schritt 1);
6) Filtration des Produktes unter permanenter Überwachung und ggf. Kontrolle des Eingangsdrucks bzw. Ausgangsdrucks;
7) Filtration des Produkts unter zwischenzeitlicher Nachentlüftung bei Bedarf;
8) Ausschieben von Produktrestflüssigkeit nach Beendigung der Filtration zur Reduzierung von Verlusten und Spülen mit Puffer oder Wasser;
9) Entleeren und Belüften der Einweg-Filtrationsvorrichtung 10 durch statisches Leerlaufenlassen oder aktiv durch Leerdrücken mit Luft (wie Schritt 3); und
10) Post-Use-Filter-Integritätstest mit einem gasförmigen Medium, z. B. Luft (Prozess wie Schritt 4).

Zu Schritt 1: Beim Befüllen der Einweg-Filtrationsvorrichtung 10 mit einem Benetzungsmedium (z. B. Wasser) unter Verwendung einer Förderpumpe 80 und der vollständigen Entlüftung über den Sterilluftfilter 54 gibt es mehrere Fehlermöglichkeiten, die aufgrund der Einweg-Technologie besonders hohe Risiken mit sich bringen.

Ein erstes Risiko besteht darin, dass die Füllgeschwindigkeit zu hoch sein könnte, sodass die Luft im System nicht genügend Zeit hat, aus den Hohlräumen zu entweichen und nach oben zu steigen. In diesem Fall kann es im späteren Filtrationsverlauf zu Luftfreisetzungen kommen, die sich dann als Luftblasen im oberen Bereich des Systems ansammeln und damit die Filtrationsfläche und damit die Filtereffizienz negativ beeinflussen.

Die automatische Steuerung dieses Prozessschritts sieht vor, dass das Befüllen der Einweg-Filtrationsvorrichtung 10 unter laufender Messung und Kontrolle des Drucks am Eingangsdrucksensor 64 erfolgt. Das Kontroll- und Steuerungssystem 78 sorgt insbesondere dafür, dass die Förderpumpe 80 zunächst langsam startet, um einen moderaten Füllprozess zu gewährleisten und dabei den zulässigen Höchstdruck nicht zu überschreiten.

Eine zweites Risiko tritt vor allem am Ende des Füllprozesses auf, wenn der Bediener der Einweg-Filtrationsvorrichtung 10 den Moment, in dem das Benetzungsmedium das obere Level erreicht und in die Entlüftungsschlauchleitung 52 eindringt, nicht oder zu spät erkennt, sodass das Benetzungsmedium in den Sterilluftfilter 54 eindringt. In diesem Fall besteht die Gefahr, dass der Sterilluftfilter 54 benetzt wird und damit keine oder nur noch eine begrenzte Luftdurchlässigkeit aufweist und somit seine eigentliche Bestimmungsfunktion, nämlich die Luft aus dem System steril entweichen zu lassen, nicht mehr oder nur noch eingeschränkt erfüllen kann.

Durch die Verwendung des Entlüftungsregelventils 74, gefolgt vom Entlüftungsflüssigkeitsdetektor 76 am Ausgang der Entlüftungsschlauchleitung 52, zwischen den Filtercapsulen 12 und dem Sterilluftfilter 54, kann mit Hilfe des Kontroll- und Steuerungssystems 78 zunächst eine kontrollierte und langsame Entlüftung durch leichtes Öffnen des Entlüftungsregelventils 74 erfolgen. Sobald der Flüssigkeitsspiegel den oberen Bereich der Einweg-Filtrationsvorrichtung 10 erreicht und die Flüssigkeit in die aufsteigende Entlüftungsschlauchleitung 52 eindringt, erkennt der Entlüftungsflüssigkeitsdetektor 76 dies, und das Kontroll- und Steuerungssystem 78 übermittelt unmittelbar ein Signal an das Entlüftungsregelventil 74, welches sofort geschlossen wird, noch bevor die Flüssigkeit den Sterilluftfilter 54 erreicht.

Ein drittes Risiko besteht darin, dass es bei manuellen Quetschventilen durchaus vorkommen kann, dass der Bediener die Förderpumpe 80 aktiviert, zu diesem Zeitpunkt ein manuell zu betätigendes Ventil am Pumpenausgang aber nicht oder nicht vollständig geöffnet hat, oder aber die Eingangsschlauchleitung 36 an einer Stelle geknickt ist, wodurch sehr schnell eine Überdruck im Schlauchsystem entstehen würde, welcher das Schlauchsystem oder eine Schlauchverbindung zum Bersten bringen bzw. eine Undichtigkeit verursachen könnte. Ein solches Risiko ist besonders vom der Hintergrund der begrenzten und oft uneinheitlichen Druckbeständigkeit von Kunststoffschlauchsets und Transfer-, bzw. Beutelsystemen zu beachten. Eine Leckage kann, abgesehen vom mikrobiologischen Kontaminationsrisiko, in Abhängigkeit von Produkt und Prozessschritt, auch einen erhebliches gesundheitliches und auch wirtschaftliches Risiko darstellen.

Dank des automatisch gesteuerten Füllprozesses kann mittels des Kontroll- und Steuerungssystems 78 die Drehzahl der Förderpumpe 80 und damit die Fließgeschwindigkeit kontrolliert bzw. gesteuert werden. Der Eingangsdrucksensor 64 kann dabei den maximal zulässigen Druck der Einweg-Filtrationsvorrichtung 10 überwachen bzw. bei Bedarf die Pumpenleistung anpassen oder auch die Förderpumpe 80 ganz anhalten, wenn z. B. eine Schlauchleitung blockiert ist und deshalb der zulässige Höchstdruck erreicht wird.

Zu Schritt 2: Auch beim Spülen und Benetzen der gesamten Einweg-Filtrationsvorrichtung 10 bzw. des Filterelements (filtrationswirksame Schicht) können bei manueller Bedienung Fehler gemacht werden, die ohne entsprechende Sensorik nur unter Zuhilfenahme von anderen Hilfsmitteln einigermaßen sicher zu vermeiden sind. Der Spülprozess dient zum Auswaschen von unerwünschten Bestandteilen und zur Konditionierung und damit zur Vorbereitung der Filterelemente in den Filtercapsulen 12 auf den folgenden Filtrationsprozess. Dabei ist zum einen die Menge des Spülmediums, zum anderen aber auch die Fließgeschwindigkeit von Bedeutung.

Ein erstes Risiko bei diesem Prozessschritt besteht darin, dass die Spülmenge in Kombination mit der Spülleistung oder auch die empfohlenen Druckbedingungen nicht eingehalten werden und damit die Filtereinheit nicht optimal gespült und vorbereitet wird. Häufig geben die Hersteller der Filtercapsulen 12 an, wie diese Prozessbedingungen aussehen sollen. Zum Beispiel kann bei diesem Prozessschritt neben dem Durchfluss auch eine bestimmte Druckdifferenz zwischen Eingangs- und Ausgangsdruck hilfreich oder gar erforderlich sein.

Mit Hilfe des Kontroll- und Steuerungssystems 78, das Informationen vom Durchflusssensor 62 am Unfiltrateingang 56 der Einweg-Filtrationsvorrichtung 10 bezieht, kann über die Drehzahl der Förderpumpe 80 der Flüssigkeitsstrom kontrolliert werden. Parallel dazu kann bei fortwährender Messung der gewünschten Druckbedingungen mit dem Eingangsregelventil 66 eine gewünschte Spülleistung eingestellt und geregelt werden.

Ein zweites Risiko bei diesem Prozessschritt ist darauf zurückzuführen, dass beim Übergang vom Benetzen der Filter zum Filtrieren aufgrund der Flüssigkeitsdynamik innerhalb der Einweg-Filtrationsvorrichtung 10 bedingt durch bautechnische Gegebenheiten die Ausspülung und Verdrängung eines Medium (z. B. Spülwasser) mit einem anderen Medium (z. B. Produkt) relativ lange dauern und signifikante Vermischungsphasen verursachen kann. Dies kann zum einen zu einem hohen Verbrauch an Spüllösung führen, zum anderen kann auch der Verlust an Produkt sehr groß sein, was ein wirtschaftliches Risiko darstellt. Im manuellen Betrieb kann der Nutzer einer Einweg-Filtrationsvorrichtung 10 die zur Vermeidung dieses Risikos erforderlichen Bedingungen nicht kontrollieren und reproduzierbar herbeiführen.

Dank des Kontroll- und Steuerungssystems 78 kann ein genau vordefiniertes, z. B. alternierendes Takten des Entlüftungsregelventils 74 und des Ausgangsregelventils 70 eingestellt werden, um eine optimale Vermischung bzw. Verdrängung einer Flüssigkeit durch eine andere Flüssigkeit unter kontrollierten Bedingungen zu erreichen und sicherzustellen.

Zu Schritt 3: Das Entleeren und Belüften der Einweg-Filtrationsvorrichtung 10 durch statisches Leerlaufenlassen oder aktiv durch Leerdrücken mit Hilfe von Luft erfordert eine vollständige Öffnung des Entlüftungsregelventils 74 und/oder des Eingangsregelventils 66, um zu gewährleisten, dass Luft in die Einweg-Filtrationsvorrichtung 10 eindringen kann und die Flüssigkeit aufgrund der Schwerkraft am unten angeordneten Filtratausgang 58 ablaufen kann.

Bei der manuellen Durchführung dieses Prozessschritts ist der Bediener nicht in der Lage zu erkennen, ob das statische Entleeren hinreichend erfolgt, da er den Flüssigkeitsstand innerhalb der Einweg-Filtrationsvorrichtung 10 nicht optisch überprüfen kann. Sofern die oben angeordneten Regelventile 74 und 66 nicht oder nicht ausreichend geöffnet werden, kann die Flüssigkeit ggf. nicht oder nicht vollständig ablaufen, und die Einweg-Filtrationsvorrichtung 10 entleert sich nicht vollständig.

Für die automatische Steuerung dieses Prozessschritts wird der Ausgangsflüssigkeitsdetektor 68 am Filtratausgang 58 der Einweg-Filtrationsvorrichtung 10 einbezogen. Der Ausgangsflüssigkeitsdetektor 68 sendet ein Signal an das Kontroll- und Steuerungssystem 78, welches dem Bediener signalisiert, dass der Entleerungsprozess abgeschlossen ist und sich auch im unteren Teil der Einweg-Filtrationsvorrichtung 10 keine Restflüssigkeit mehr befindet, obwohl dies optisch möglicherweise nicht sichtbar ist.

Zu Schritt 4: Vor dem bestimmungsgemäßen Filtrationsprozess werden die Filterelemente in der Regel einem Integritätstest mit einem gasförmigen Medium, insbesondere Luft, unterzogen. Der Integritätstest erfolgt z. B. unter vollständiger Abriegelung des Eingangsregelventils 66 über den Entlüftungsausgang bzw. Lufteingang 60. Dabei wird die Eingangsseite der Einweg-Filtrationsvorrichtung 10 mit einem definierten Testdruck, der von einem extern angeschlossenen Integrationstestgerät erzeugt wird, beaufschlagt, um anschließend zu überprüfen ob bzw. wie lange dieser Testdruck aufrechterhalten werden kann. Diese Zeitdauer lässt einen Rückschluss auf die Integrität der Filtermembranen zu.

Bei manueller Durchführung dieses Prozessschritts besteht das Risiko, dass der Bediener der Einweg-Filtrationsvorrichtung 10 das Eingangsregelventil 66 nicht oder aber nicht hinreichend fest geschlossen hat, sodass während der Testphase geringe Mengen Luft entweichen können und das Testergebnis beeinflussen. Dies würde zu einem falschen Testergebnis führen, sodass der Integritätstest und ggf. auch der gesamt Spülschritt vor dem Integritätstest noch einmal wiederholt werden müssten. Dies würde einen erheblichen zusätzlichen Zeitaufwand bedeuten.

Das Kontroll- und Steuerungssystem 78 ermöglicht die automatische und zuverlässige Schließung des Eingangsregelventils 66 (wie auch der anderen Regelventile 70, 74) mit einem elektrischen oder pneumatischen Antrieb, welcher einen Schließkörper über einen vordefinierten Weg und unter definierter und kontrollierter Kraft schließt. Das Risiko des unvollständigen bzw. zu schwachen Schließens des Eingangsregelventils 66 durch den Bediener ist damit ausgeschlossen.

Zu Schritt 5: Die Risiken beim Befüllen der Einweg-Filtrationsvorrichtung 10 mit Produkt und der vollständigen Entlüftung entsprechen denen, die bereits im Zusammenhang mit Schritt 1 beschrieben wurden. Bezüglich der Vermeidung bzw. Minimierung dieser Risiken wird deshalb auf die dortigen Ausführungen verwiesen.

Zu Schritt 6: Die Filtration des Produktes unter permanenter Überwachung und ggf. Kontrolle des Eingangsdrucks bzw. Ausgansdrucks soll in der Regel unter konstanten Durchflussbedingungen durchgeführt werden.

Üblicherweise hat eine Einweg-Filtrationsvorrichtung 10 in Abhängigkeit von Filterfläche und Produkt eine begrenzte Kapazität. Das bedeutet, dass nach einer bestimmen Filtrationsmenge die Poren des Filters allmählich zu verstopfen beginnen, was bei konstantem Durchfluss zu einem Anstieg des Eingangsdrucks führt. Dieser ist aufgrund der Druckbegrenzung der Einweg-Filtrationsvorrichtung 10 jedoch limitiert und darf nicht überschritten werden, um ein Bersten der Einweg-Filtrationsvorrichtung 10 bzw. eine Leckage zu vermeiden. Im manuellen Prozess muss daher der Druck vom Bediener permanent überwacht und kontrolliert werden.

Die automatisierte Einweg-Filtrationsvorrichtung 10, die mit dem Eingangsdrucksensor 64 am Unfiltrateingang 56 ausgestattet ist, erlaubt es mit Hilfe des Kontroll- und Steuerungssystems 78 die Drucküberwachung kontinuierlich und lückenlos sicherzustellen. Tritt der Fall eines Druckanstieges ein, kann durch Drosselung oder Abschaltung der Förderpumpe 80 und/oder durch Schließen des Eingangsregelventils 66 eine kritische Überdrucksituation vermieden werden.

Zu Schritt 7: Die Filtration des Produkts unter zwischenzeitlicher Nachentlüftung bei Bedarf ist bei manueller Durchführung ebenfalls fehleranfällig. Zum einen ist es wichtig, den richtigen Filtrationsdruck einzuhalten, zum anderen dürfen bestimmte Strömungsgeschwindigkeiten nicht überschritten werden, um z. B. das Produkt vor zu hohen Scherkräften zu schützen oder eine frühzeitige Verblockung zu vermeiden. Des Weiteren besteht bei der Nachentlüftung die Gefahr, dass der Sterilluftfilter 54 bei falscher Handhabung benetzt und dadurch in seiner Funktion beeinträchtigt wird.

Mit Hilfe des Kontroll- und Steuerungssystems 78, das Informationen vom Durchflusssensor 62 am Unfiltrateingang 56 der Einweg-Filtrationsvorrichtung 10 bezieht, kann über die Drehzahl der Förderpumpe 80 eine gewünschte Filtrationsleistung eingestellt und geregelt werden. Somit ist gewährleistest, dass die vorgegebenen Prozessparameter bestmöglich eingehalten werden, um zu erreichen, dass der gesamte Filtrationsprozess möglichst gleichmäßig und produktschonend abläuft.

Ein weiteres Risiko bei der Filtration ergibt sich gegen Ende des Filtrationsprozesses. Der Druck im System kann auf ein kritisches Niveau ansteigen, wenn die Filter verblocken, sodass die Gefahr des Berstens besteht, insbesondere für die Schlauchleitungen. Die Berstgefahr kann durch unsachgemäße Handhabung noch erhöht werden.

Das Kontroll- und Steuerungssystem 78 kann ein Verblocken der Filter durch die ständige Überwachung des Drucks und des Durchflusses sicher erkennen. Durch entsprechende Regelung der Drehzahl der Förderpumpe 80 und des Eingangsregelventils 66 kann das System abgeschaltet werden, falls die Filter verblocken.

Während der Filtration kann sich durch Entbindung aus dem flüssigen Medium oder aufgrund der Prozessbedingungen langsam Luft oder Gas in der Filtereinheit ansammeln und regelrecht in der Filtereinheit gefangen werden. Dies kann soweit führen, dass der Flüssigkeitsspiegel in der Filtereinheit absinkt und der obere Bereich der Filterelemente selbst nicht mehr filtrationswirksam ist. Dadurch werden die filtrationswirksame Fläche und damit auch die Filterkapazität reduziert, was ein wirtschaftliches Risiko darstellt. Das Kontroll- und Steuerungssystem 78 kann durch ständige Überwachung des Flüssigkeitsspiegels mit Hilfe des Entlüftungsflüssigkeitsdetektors 76 automatisch zwischenzeitliche Nachentlüftungsschritte einleiten, um diesem Risiko entgegenzuwirken.

Beim Nachentlüften selbst besteht außerdem die Gefahr, dass Medium in die Entlüftungsschlauchleitung 52 bis zum Sterilluftfilter 54 vordringen kann und dann den Sterilluftfilter 54 benetzt. Danach ist eine Entlüftung des Systems nur noch eingeschränkt, evtl. gar nicht mehr möglich.

Durch die Verwendung des Entlüftungsregelventils 74, gefolgt vom Entlüftungsflüssigkeitsdetektor 76 am Ausgang der Entlüftungsschlauchleitung 52, zwischen den Filtercapsulen 12 und dem Sterilluftfilter 54, kann mit Hilfe des Kontroll- und Steuerungssystems 78 zunächst eine kontrollierte und langsame Entlüftung durch leichtes Öffnen des Entlüftungsregelventils 74 erfolgen. Sobald der Flüssigkeitsspiegel den oberen Bereich der Einweg-Filtrationsvorrichtung 10 erreicht und die Flüssigkeit in die aufsteigende Entlüftungsschlauchleitung 52 eindringt, erkennt der Entlüftungsflüssigkeitsdetektor 76 dies, und das Kontroll- und Steuerungssystem 78 übermittelt unmittelbar ein Signal an das Entlüftungsregelventil 74, welches sofort geschlossen wird, noch bevor die Flüssigkeit den Sterilluftfilter 54 erreicht.

Zu Schritt 8: Beim Ausschieben von Produktrestflüssigkeit nach Beendigung der Filtration und Spülen mit Puffer oder Wasser besteht u. a. die Gefahr, dass der Druck im System nach dem erfolgreichen Ausschieben der Produktrestflüssigkeit auf ein hohes Maß ansteigt, da die benetzten Filter für Luft nicht durchlässig sind.

Durch die Einbindung des Eingangsdrucksensors 64 kann das Kontroll- und Steuerungssystem 78 die Leistung der Förderpumpe 80 frühzeitig drosseln und ggf. abschalten, wenn der Druck zu hoch wird. Weiterhin besteht die Möglichkeit, den Druck über das Entlüftungsregelventil 74 zu regeln. Gleichzeitig kann über den Ausgangsflüssigkeitsdetektor 68 am Filtratausgang 58 eine effiziente Nutzung der Produktrestflüssigkeit gewährleistet werden, da das System erkennt, wenn die gesamte Restflüssigkeit ausgeschoben wurde, also keine weitere Flüssigkeit mehr ausgeschoben wird.

Beim anschließenden Spülen muss das System wieder entlüftet werden, wobei wieder das Risiko besteht, dass der Sterilluftfilter 54 benetzt wird. Danach ist eine Entlüftung des Systems nur noch eingeschränkt, evtl. gar nicht mehr möglich.

Durch die Verwendung des Entlüftungsregelventils 74, gefolgt vom Entlüftungsflüssigkeitsdetektor 76 am Ausgang der Entlüftungsschlauchleitung 52, zwischen den Filtercapsulen 12 und dem Sterilluftfilter 54, kann mit Hilfe des Kontroll- und Steuerungssystems 78 zunächst eine kontrollierte und langsame Entlüftung durch leichtes Öffnen des Entlüftungsregelventils 74 erfolgen. Sobald der Flüssigkeitsspiegel den oberen Bereich der Einweg-Filtrationsvorrichtung 10 erreicht und die Flüssigkeit in die aufsteigende Entlüftungsschlauchleitung 52 eindringt, erkennt der Entlüftungsflüssigkeitsdetektor 76 dies, und das Kontroll- und Steuerungssystem 78 übermittelt unmittelbar ein Signal an das Entlüftungsregelventil 74, welches sofort geschlossen wird, noch bevor die Flüssigkeit den Sterilluftfilter 54 erreicht.

Zu Schritt 9: Beim Entleeren und Belüften der Einweg-Filtrationsvorrichtung 10 durch statisches Leerlaufenlassen oder aktiv durch Leerdrücken mit Luft besteht das Risiko, dass das System nicht sicher statisch leerlaufen kann, wenn das Entlüftungsregelventil 74 und/oder das Eingangsregelventil 66 nicht geöffnet sind. Grundsätzlich ist es schwierig, den aktuellen Entleerungsgrad des Systems festzustellen, da für den Bediener nicht ohne Weiteres sichtbar ist, wie viel Restflüssigkeit noch im System ist.

Für die automatische Steuerung dieses Prozessschritts werden das Entlüftungsregelventil 74 und/oder das Eingangsregelventil 66 und der Ausgangsflüssigkeitsdetektor 68 am Filtratausgang 58 der Einweg-Filtrationsvorrichtung 10 einbezogen. Das Entlüftungsregelventil 74 und/oder das Eingangsregelventil 66 werden automatisch geöffnet, und der Ausgangsflüssigkeitsdetektor 68 kann sicher detektieren, ob sich die Einweg-Filtrationsvorrichtung 10 vollständig statisch entleert hat. Außerdem kann der Ausgangsflüssigkeitsdetektor 68 den erfolgreichen Abschluss des Entleerungsvorgangs detektieren und den Prozessschritt abschließen.

Wenn das System mit Luft aktiv über die Eingangsleitung leergedrückt wird, besteht das Risiko, dass nach erfolgreichem Ausschieben der Flüssigkeit der Druck stark ansteigt, da die benetzte Membran luftundurchlässig ist. Um die Gefahr des Berstens zu vermeiden, wird mittels des Eingangsdrucksensors 64 am Unfiltrateingang 56 und des Kontroll- und Steuerungssystems 78 kontinuierlich der Druck überwacht. Tritt der Fall eines Druckanstieges ein, kann durch Drosselung oder Abschaltung der Förderpumpe 80 oder durch Schließen des Eingangsregelventils 66 eine kritische Überdrucksituation vermieden werden.

Selbstverständlich können noch weitere und/oder andere als die oben erläuterten Sensoren und Regeleinrichtungen zur (teil-)automatisierten Durchführung der oben erläuterten und/oder zusätzlicher oder anderer Prozesse bzw. Prozessschritte vorgesehen sein.

### Bezugszeichenliste

10 Einweg-Filtrationsvorrichtung
12 Filtercapsule
14 Halterung
16 Stützsäule
18 Querstrebe
20 Standfuß
22 Haltemittel
24 Rohrleitung
26 Abzweigung
28 Einlassventil
30 Verzweigung
32 Tri-Clamp-Verbinndung
34 Zwischenschlauchstück
36 Eingangsschlauchleitung
38 erster Sterilkonnektor
40 Auslassventil
42 Verzweigung
44 Tri-Clamp-Verbinndung
46 Zwischenschlauchstück
48 Ausgangsschlauchleitung
50 zweiter Sterilkonnektor
52 Entlüftungsschlauchleitung
54 Sterilluftfilter
56 Unfiltrateingang
58 Filtratausgang
60 Entlüftungsausgang
62 Durchflusssensor
64 Eingangsdrucksensor
66 Eingangsregelventil
68 Ausgangsflüssigkeitsdetektor
70 Ausgangsregelventil
72 Ausgangsdrucksensor
74 Entlüftungsregelventil
76 Entlüftungsflüssigkeitsdetektor
78 Kontroll- und Steuerungssystem
80 Förderpumpe

## Patentansprüche

1. Automatisierte Einweg-Filtrationsvorrichtung (10) für großvolumige Filtrationsprozesse, mit
einem Unfiltrateingang (56),
einem oder mehreren Filterelementen,
einem Filtratausgang (58),
einem Sterilluftfilter (54), der an einen Entlüftungsausgang (60) der Einweg-Filtrationsvorrichtung (10) angeschlossen ist, und
Sensoren zur Erfassung bestimmter Prozessparameter und Regeleinrichtungen zur Einstellung bestimmter Prozessparameter, sowie
einem externen Kontroll- und Steuerungssystem (78), wobei die Sensoren und Regeleinrichtungen mit dem externen Kontroll- und Steuerungssystem (78) verbunden sind, das zur Auswertung und Verarbeitung von Sensordaten sowie zur Ansteuerung der Regeleinrichtungen basierend auf einem oder mehreren Steuerungsalgorithmen eingerichtet ist,
wobei die Sensoren folgende Sensoren umfassen: einen am Unfiltrateingang (56) angeordneten Durchflusssensor (62); einen am Unfiltrateingang (56) angeordneten Eingangsdrucksensor (64); einen am Filtratausgang (58) angeordneten Ausgangsflüssigkeitsdetektor (68); einen am Filtratausgang (58) angeordneten Ausgangsdrucksensor (72);
wobei die Regeleinrichtungen folgende Regeleinrichtungen umfassen: eine eingangsseitige Förderpumpe (80), deren Förderleistung regelbar ist; ein am Unfiltrateingang (56) angeordnetes Eingangsregelventil (66); ein am Filtratausgang (58) angeordnetes Ausgangsregelventil (70); ein zwischen den Entlüftungsausgang (60) und den Sterilluftfilter (54) eingefügtes Entlüftungsregelventil (74),
wobei das Entlüftungsregelventil (74) unmittelbar durch das externe Kontroll- und Steuerungssystem (78) geöffnet oder geschlossen werden kann.

2. Einweg-Filtrationsvorrichtung (10) nach Anspruch 1, **dadurch gekennzeichnet, dass** die Sensoren einen zwischen den Entlüftungsausgang (60) und den Sterilluftfilter (54) eingefügten Entlüftungsflüssigkeitsdetektor (76) umfassen.

3. Verfahren zur Steuerung einer automatisierten Einweg-Filtrationsvorrichtung nach einem der vorhergehenden Ansprüche, wobei das Kontroll- und Steuerungssystem (78) mehrere oder alle der folgenden Prozessschritte wenigstens teilweise automatisch nacheinander durchführt:
- Befüllen der Einweg-Filtrationsvorrichtung (10) mit einem Benetzungsmedium und vollständige Entlüftung über den Sterilluftfilter (54);
- Spülen und Benetzen der Einweg-Filtrationsvorrichtung (10) oder des Filterelements;
- Entleeren und Belüften der Einweg-Filtrationsvorrichtung (10) durch statisches Leerlaufenlassen oder aktiv durch Leerdrücken mit Hilfe eines gasförmigen Mediums;
- Pre-Use-Filter-Integritätstest mit einem gasförmigen Medium;
- Befüllen der Einweg-Filtrationsvorrichtung (10) mit einem flüssigen Produkt und vollständige Entlüftung;
- Filtration eines flüssigen Produkts unter permanenter Überwachung des Eingangsdrucks bzw. Ausgangsdrucks und vorzugsweise der Durchflussrate;
- Filtration eines flüssigen Produkts unter zwischenzeitlicher Nachentlüftung der Einweg-Filtrationsvorrichtung (10) bei Bedarf;
- Ausschieben von Produktrestflüssigkeit nach Beendigung der Filtration und Spülen mit Puffer oder Wasser oder einem anderen flüssigen Medium;
- Entleeren und Belüften der Einweg-Filtrationsvorrichtung (10) durch statisches Leerlaufenlassen oder aktiv durch Leerdrücken mit Hilfe eines gasförmigen Mediums; und
- Post-Use-Filter-Integritätstest mit einem gasförmigen Medium.

4. Verfahren nach Anspruch 3, **dadurch gekennzeichnet, dass** das Befüllen der Einweg-Filtrationsvorrichtung (10) mit Benetzungsmedium und/oder Produkt unter fortlaufender Überwachung des Drucks am Eingangsdrucksensor (64) durch das das Kontroll- und Steuerungssystem (78) erfolgt und das Kontroll- und Steuerungssystem (78) die Leistung der Förderpumpe (80) so regelt, dass ein vorgegebener Höchstdruck nicht überschritten wird.

5. Verfahren nach Anspruch 3 oder 4, **dadurch gekennzeichnet, dass** beim Entlüften und/oder Nachentlüften der Einweg-Filtrationsvorrichtung (10) über den Sterilluftfilter (54) das Entlüftungsregelventil (74) vom Kontroll- und Steuerungssystem (78) geöffnet wird, bis der Entlüftungsflüssigkeitsdetektor (76) Flüssigkeit detektiert, und dass das Kontroll- und Steuerungssystem (78) dann unmittelbar das Entlüftungsregelventil (74) schließt.

6. Verfahren nach einem der Ansprüche 3 bis 5, **dadurch gekennzeichnet, dass** beim Spülen und Benetzen der Einweg-Filtrationsvorrichtung (10) oder des Filterelements das Kontroll- und Steuerungssystem (78) Informationen vom Durchflusssensor (62) am Unfiltrateingang (56) bezieht und darauf basierend die Leistung Förderpumpe (80) regelt, wobei das Kontroll- und Steuerungssystem (78) vorzugsweise dabei gleichzeitig den Druck am Eingangsdrucksensor (64) fortlaufend überwacht und über das Eingangsregelventil (66) und/oder das Ausgangsregelventil (70) eine gewünschte Spülleistung sowie gewünschte Druckverhältnisse einstellt und regelt.

7. Verfahren nach einem der Ansprüche 3 bis 6, **dadurch gekennzeichnet, dass** beim Spülen und Benetzen der Einweg-Filtrationsvorrichtung (10) oder des Filterelements das Kontroll- und Steuerungssystem (78) das Entlüftungsregelventil (74) und das Ausgangsregelventil (70) alternierend regelt und/oder taktet, so dass eine kontrollierte Vermischung und/oder Verdrängung einer Flüssigkeit durch eine andere Flüssigkeit stattfindet.

8. Verfahren nach einem der Ansprüche 3 bis 7, **dadurch gekennzeichnet, dass** beim Entleeren und Belüften der Einweg-Filtrationsvorrichtung (10) durch statisches Leerlaufenlassen oder aktiv durch Leerdrücken mit Hilfe von Luft das Kontroll- und Steuerungssystem (78) das Entlüftungsregelventil (74) und/oder das Ausgangsregelventil (70) öffnet.

9. Verfahren nach einem der Ansprüche 3 bis 8, **dadurch gekennzeichnet, dass** beim Entleeren und Belüften der Einweg-Filtrationsvorrichtung (10) durch statisches Leerlaufenlassen oder aktiv durch Leerdrücken mit Hilfe von Luft das Kontroll- und Steuerungssystem (78) basierend auf Informationen des Ausgangsflüssigkeitsdetektors (68) signalisiert, dass der Entleerungsprozess abgeschlossen ist.

10. Verfahren nach einem der Ansprüche 3 bis 9, **dadurch gekennzeichnet, dass** beim Pre-Use-Filter-Integritätstest mit einem gasförmigen Medium das Kontroll- und Steuerungssystem (78) ein externes Integritätstestgerät ansteuert, welches den Integritätstest selbst durchführt, wobei das Kontroll- und Steuerungssystem (78) über einen Schließkörper (Antrieb) die Regelventile so ansteuert, dass dabei das Eingangsregelventil (66) geschlossen und das Ausgangsregelventil (70) sowie das Entlüftungsregelventil (74) geöffnet sind.

11. Verfahren nach einem der Ansprüche 3 bis 10, **dadurch gekennzeichnet, dass** bei der Filtration eines Produktes und/oder beim Ausschieben von Produktrestflüssigkeit nach Beendigung der Filtration und Spülen mit Puffer oder Wasser und/oder beim Entleeren und Belüften der Einweg-Filtrationsvorrichtung (10) das Kontroll- und Steuerungssystem (78) den Druck am Eingangsdrucksensor (64) fortlaufend überwacht und/oder Informationen vom Durchflusssensor (62) am Unfiltrateingang (56) bezieht, und dass das Kontroll- und Steuerungssystem (78) darauf basierend die Förderpumpe (80) so regelt, dass eine bestimmte Filtrationsleistung erreicht und/oder dass ein vorbestimmter Druck nicht überschritten wird, wobei das Kontroll- und Steuerungssystem (78) im Falle eines übermäßigen Druckanstieges die Förderpumpe (80) drosselt oder abschaltet und/oder das Eingangsregelventil (66) schließt.

12. Verfahren nach einem der Ansprüche 3 bis 11, **dadurch gekennzeichnet, dass** beim Ausschieben von Produktrestflüssigkeit nach Beendigung der Filtration das Kontroll- und Steuerungssystem (78) basierend auf Informationen des Ausgangsflüssigkeitsdetektors (68) signalisiert, dass der Ausschiebeprozess abgeschlossen ist.

## Claims

1. Automated single-use filtration device (10) for large-volume filtration processes, comprising
an unfiltrate inlet (56),
one or more filter elements,
a filtrate outlet (58),
a sterile air filter (54) connected to a venting outlet (60) of the single-use filtration device (10), and
sensors for detecting specific process parameters and regulating mechanisms for adjusting specific process parameters, as well as
an external monitoring and control system (78), wherein the sensors and regulating mechanisms are connected to the external monitoring and control system (78) which is adapted for evaluating and processing sensor data and for controlling the regulating mechanisms based on one or more control algorithms,
wherein the sensors comprise the following sensors: a flow sensor (62) arranged at the unfiltrate inlet (56); an inlet pressure sensor (64) arranged at the unfiltrate inlet (56); an outlet liquid detector (68) arranged at the filtrate outlet (58); an outlet pressure sensor (72) arranged at the filtrate outlet (58);
wherein the regulating mechanisms comprise the following regulating mechanisms: an inlet-side feed pump (80), the delivery rate of which is adjustable; an inlet regulating valve (66) arranged at the unfiltrate inlet (56); an outlet regulating valve (70) arranged at the filtrate outlet (58); a venting regulating valve (74) inserted between the venting outlet (60) and the sterile air filter (54),
wherein the venting regulating valve (74) can be immediately opened or closed by the external monitoring and control system (78).

2. Single-use filtration device (10) according to claim 1, **characterized in that** the sensors comprise a venting liquid detector (76) inserted between the venting outlet (60) and the sterile air filter (54).

3. Method of controlling an automated single-use filtration device according to any one of the preceding claims, wherein the monitoring and control system (78) performs, at least partially automatically, some or all of the following process steps one after the other:
- filling the single-use filtration device (10) with a wetting medium and complete venting via the sterile air filter (54) ;
- rinsing and wetting the single-use filtration device (10) or the filter element;
- emptying and aerating the single-use filtration device (10) by static draining or actively by emptying by pressing with a gaseous medium;
- pre-use filter integrity test using a gaseous medium;
- filling the single-use filtration device (10) with a liquid product and complete venting;
- filtering a liquid product under permanent supervision of the inlet pressure or outlet pressure and preferably of the flow rate;
- filtering a liquid product under intermediate post-venting of the single-use filtration device (10) if required;
- expelling residual product liquid after completion of the filtration and rinsing with buffer or water or another liquid medium;
- emptying and aerating the single-use filtration device (10) by static draining or actively by emptying by pressing with a gaseous medium; and
- post-use filter integrity test using a gaseous medium.

4. Method according to claim 3, **characterized in that** the filling of the single-use filtration device (10) with wetting medium and/or product is carried out under continuous supervision of the pressure at the inlet pressure sensor (64) by the monitoring and control system (78), and the monitoring and control system (78) regulates the performance of the feed pump (80) such that a predetermined maximum pressure is not exceeded.

5. Method according to claim 3 or 4, **characterized in that**, during venting and/or post-venting of the single-use filtration device (10) via the sterile air filter (54), the venting regulating valve (74) is opened by the monitoring and control system (78) until the venting liquid detector (76) detects liquid, and **in that** the monitoring and control system (78) then immediately closes the venting regulating valve (74).

6. Method according to any one of claims 3 to 5, **characterized in that**, during rinsing and wetting of the single-use filtration device (10) or of the filter element, the monitoring and control system (78) obtains information from the flow sensor (62) at the unfiltrate inlet (56) and regulates the performance of the feed pump (80) based thereon, wherein preferably the monitoring and control system (78) at the same time continuously supervises the pressure at the inlet pressure sensor (64) and adjusts and regulates a desired rinsing performance and desired pressure conditions via the inlet regulating valve (66) and/or the outlet regulating valve (70).

7. Method according to any one of claims 3 to 6, **characterized in that**, during rinsing and wetting of the single-use filtration device (10) or of the filter element, the monitoring and control system (78) regulates and/or clocks the venting regulating valve (74) and the outlet regulating valve (70) alternately, such that a controlled mixing and/or displacement of a liquid by another liquid takes place.

8. Method according to any one of claims 3 to 7, **characterized in that**, during emptying and aerating of the single-use filtration device (10) by static draining or actively by emptying by pressing with air, the monitoring and control system (78) opens the venting regulating valve (74) and/or the outlet regulating valve (70).

9. Method according to any one of claims 3 to 8, **characterized in that**, during emptying and aerating of the single-use filtration device (10) by static draining or actively by emptying by pressing with air, the monitoring and control system (78) signalizes that the emptying process is completed based on information from the outlet liquid detector (68).

10. Method according to any one of claims 3 to 9, **characterized in that**, during the pre-use filter integrity test using a gaseous medium, the monitoring and control system (78) pilots an external integrity test device which performs the integrity test itself, wherein the monitoring and control system (78) pilots the regulating valves via a closing body (drive) such that the inlet regulating valve (66) is closed and the outlet regulating valve (70) and the venting regulating valve (74) are open.

11. Method according to any one of claims 3 to 10, **characterized in that**, during the filtration of a product and/or the expelling of residual product liquid after completion of the filtration and rinsing with buffer or water and/or during emptying and aerating of the single-use filtration device (10), the monitoring and control system (78) continuously supervises the pressure at the inlet pressure sensor (64) and/or obtains information from the flow sensor (62) at the unfiltrate inlet (56), and **in that**, based thereon, the monitoring and control system (78) regulates the feed pump (80) such that a specific filtration performance is achieved and/or a predetermined pressure is not exceeded, wherein, in the event of an excessive pressure increase, the monitoring and control system (78) throttles the feed pump (80) or switches it off and/or closes the inlet regulating valve (66).

12. Method according to any one of claims 3 to 11, **characterized in that**, during expelling of residual product liquid after completion of the filtration, the monitoring and control system (78) signalizes that the expelling process is completed based on information from the outlet liquid detector (68).

## Revendications

1. Dispositif de filtration jetable (10) automatisé pour processus de filtration d'un grand volume, comprenant
une entrée de non-filtrat (56),
un ou plusieurs éléments de filtre,
une sortie de filtrat (58),
un filtre à air stérile (54), qui est raccordé à une sortie d'aération (60) du dispositif de filtration jetable (10), et
des capteurs pour la saisie de paramètres de processus déterminés et des équipements de réglage pour le réglage de paramètres de processus déterminés, ainsi que
un système de contrôle et de commande (78) extérieur, dans lequel les capteurs et les équipements de réglage sont reliés au système de contrôle et de commande (78) extérieur qui est aménagé pour l'évaluation et le traitement de données de capteur ainsi que pour le pilotage des équipements de réglage sur la base d'un ou plusieurs algorithmes de commande,
dans lequel les capteurs comprennent les capteurs suivants : un capteur de débit (62) agencé au niveau de l'entrée de non-filtrat (56) ; un capteur de pression à l'entrée (64) agencé au niveau de l'entrée de non-filtrat (56) ; un détecteur de liquide de sortie (68) agencé au niveau de la sortie de filtrat (58) ; un capteur de pression à la sortie (72) agencé au niveau de la sortie de filtrat (58) ;
dans lequel les équipements de réglage comprennent les équipements de réglage suivants : une pompe d'alimentation (80) côté entrée, dont la capacité d'alimentation est réglable ; une vanne de régulation à l'entrée (66) agencée au niveau de l'entrée de non-filtrat (56) ; une vanne de régulation à la sortie (70) agencée au niveau de la sortie de filtrat (58) ; une vanne de régulation d'aération (74) insérée entre la sortie d'aération (60) et le filtre à air stérile (54),
dans lequel la vanne de régulation d'aération (74) peut être directement ouverte ou fermée par le système de contrôle et de commande (78) extérieur.

2. Dispositif de filtration jetable (10) selon la revendication 1, **caractérisé en ce que** les capteurs comprennent un détecteur de liquide d'aération (76) inséré entre la sortie d'aération (60) et le filtre à air stérile (54).

3. Procédé de commande d'un dispositif de filtration jetable automatisé selon l'une quelconque des revendications précédentes, dans lequel le système de contrôle et de commande (78) exécute plusieurs ou toutes les étapes de processus suivantes au moins en partie automatiquement les unes après les autres :
- remplissage du dispositif de filtration jetable (10) avec un milieu de mouillage et aération complète via le filtre à air stérile (54) ;
- rinçage et mouillage du dispositif de filtration jetable (10) ou de l'élément de filtre ;
- vidage et aération du dispositif de filtration jetable (10) par vidange statique ou activement par purge sous pression à l'aide d'un milieu gazeux ;
- test d'intégrité de filtre avant utilisation avec un milieu gazeux ;
- remplissage du dispositif de filtration jetable (10) avec un produit liquide et aération complète ;
- filtration d'un produit liquide sous surveillance permanente de la pression à l'entrée ou pression à la sortie et de préférence du débit ;
- filtration d'un produit liquide sous post-aération intermédiaire du dispositif de filtration jetable (10) en cas de besoin ;
- expulsion du liquide résiduel de produit au terme de la filtration et du rinçage avec une solution tampon ou de l'eau ou un autre milieu liquide ;
- vidage et aération du dispositif de filtration jetable (10) par vidange statique ou activement par purge sous pression à l'aide d'un milieu gazeux ; et
- test d'intégrité de filtre après utilisation avec un milieu gazeux.

4. Procédé selon la revendication 3, **caractérisé en ce que** le remplissage du dispositif de filtration jetable (10) avec un milieu de mouillage et/ou produit s'effectue sous surveillance continue de la pression au niveau du capteur de pression à l'entrée (64) par le système de contrôle et de commande (78) et le système de contrôle et de commande (78) règle la capacité de la pompe d'alimentation (80) de sorte qu'une pression maximale prédéfinie n'est pas dépassée.

5. Procédé selon la revendication 3 ou 4, **caractérisé en ce que** lors de l'aération et/ou de la post-aération du dispositif de filtration jetable (10) via le filtre à air stérile (54) la vanne de régulation d'aération (74) est ouverte par le système de contrôle et de commande (78) jusqu'à ce que le détecteur de liquide d'aération (76) détecte le liquide, et que le système de contrôle et de commande (78) ferme ensuite directement la vanne de régulation d'aération (74).

6. Procédé selon l'une quelconque des revendications 3 à 5, **caractérisé en ce que** lors du rinçage et du mouillage du dispositif de filtration jetable (10) ou de l'élément de filtre le système de contrôle et de commande (78) reçoit des informations du capteur de débit (62) au niveau de l'entrée de non-filtrat (56) et sur la base de celles-ci règle la capacité de la pompe d'alimentation (80), dans lequel le système de contrôle et de commande (78) de préférence surveille ainsi simultanément en continu la pression au niveau du capteur de pression à l'entrée (64) et via la vanne de régulation à l'entrée (66) et/ou la vanne de régulation à la sortie (70) ajuste et règle une capacité de rinçage souhaitée ainsi que les rapports de pression souhaités.

7. Procédé selon l'une quelconque des revendications 3 à 6, **caractérisé en ce que** lors du rinçage et du mouillage du dispositif de filtration jetable (10) ou de l'élément de filtre le système de contrôle et de commande (78) règle et/ou synchronise en alternance la vanne de régulation d'aération (74) et la vanne de régulation à la sortie (70), de sorte qu'un mélange contrôlé et/ou déplacement d'un liquide par un autre liquide a lieu.

8. Procédé selon l'une quelconque des revendications 3 à 7, **caractérisé en ce que** lors du vidage et de l'aération du dispositif de filtration jetable (10) par vidange statique ou activement par purge sous pression à l'aide d'air le système de contrôle et de commande (78) ouvre la vanne de régulation d'aération (74) et/ou la vanne de régulation à la sortie (70).

9. Procédé selon l'une quelconque des revendications 3 à 8, **caractérisé en ce que** lors du vidage et de l'aération du dispositif de filtration jetable (10) par vidange statique ou activement par purge sous pression à l'aide d'air le système de contrôle et de commande (78) signale sur la base des informations du détecteur de liquide de sortie (68) que le processus de vidage est achevé.

10. Procédé selon l'une quelconque des revendications 3 à 9, **caractérisé en ce que** lors du test d'intégrité de filtre avant utilisation avec un milieu gazeux le système de contrôle et de commande (78) pilote un appareil de test d'intégrité extérieur, lequel exécute le test d'intégrité lui-même, dans lequel le système de contrôle et de commande (78) pilote les vannes de régulation via un corps de fermeture (entraînement) de sorte qu'ainsi la vanne de régulation à l'entrée (66) est fermée et la vanne de régulation à la sortie (70) ainsi que la vanne de régulation d'aération (74) sont ouvertes.

11. Procédé selon l'une quelconque des revendications 3 à 10, **caractérisé en ce que** lors de la filtration d'un produit et/ou lors de l'expulsion du liquide résiduel de produit au terme de la filtration et du rinçage avec une solution tampon ou de l'eau et/ou lors du vidage et de l'aération du dispositif de filtration jetable (10) le système de contrôle et de commande (78) surveille en continu la pression au niveau du capteur de pression à l'entrée (64) et/ou reçoit des informations du capteur de débit (62) au niveau de l'entrée de non-filtrat (56), et que le système de contrôle et de commande (78) règle la pompe d'alimentation (80) sur la base de celles-ci, de sorte qu'une capacité de filtration définie est atteinte et/ou qu'une pression prédéfinie n'est pas dépassée, dans lequel le système de contrôle et de commande (78) dans le cas d'une augmentation de pression excessive met la pompe d'alimentation (80) au ralenti ou hors service et/ou ferme la vanne de régulation à l'entrée (66).

12. Procédé selon l'une quelconque des revendications 3 à 11, **caractérisé en ce que** lors de l'expulsion du liquide résiduel de produit au terme de la filtration le système de contrôle et de commande (78) sur la base des informations du détecteur de liquide de sortie (68) signale que le processus d'expulsion est achevé.
